# EUROPÄISCHE PATENTANMELDUNG

(11) **EP 4 714 570 A1**
(43) Veröffentlichungstag der Anmeldung: **25.03.2026**
(21) Anmeldenummer: 24201880.2
(22) Anmeldetag: 23.09.2024
(51) Int. Cl.: B21D 51/26, B41F 17/00

(54) **BEARBEITUNGSMASCHINE**

(71) Anmelder: Hinterkopf GmbH, 73054 Eislingen/Fils (DE)
(72) Erfinder: Egetenmeier, Timo, 73525 Schwäbisch Gmünd (DE); Drexler, Stefan, 73337 Bad Überkingen (DE)
(74) Vertreter: Patentanwälte Magenbauer & Kollegen Partnerschaft mbB

(57) **Zusammenfassung**

Die Erfindung betrifft eine Bearbeitungsmaschine (1) zur Bearbeitung von Behälterrohlingen (65), mit einem ersten Maschinenteil (11) und einem drehbar um eine Drehachse (14) am ersten Maschinenteil (11) gelagerten Werkstückrundtisch (62), dem eine Antriebseinrichtung (13) für eine Bereitstellung einer Drehschrittbewegung, pneumatisch betätigte Spannzangen (63) und Pneumatikventile (69) zugeordnet sind, wobei die Pneumatikventile (69) zwischen einer Belüftungsstellung für die Spannzange (63) und einer Entlüftungsstellung für die Spannzange (63) umschaltbar sind und wobei mehrere Pneumatikventile (69) mit einem Druckluftspeicher (74) verbunden sind, sowie mit einer Kupplungseinrichtung (22), die für eine Druckluftversorgung des Druckluftspeichers (74) ausgebildet ist und die ein beweglich am ersten Maschinenteil (11) gelagertes erstes Kupplungsteil (23) und ein zweites Kupplungsteil (73) aufweist, das gegenüberliegend zum ersten Kupplungsteil (23) am Werkstückrundtisch (62) angeordnet ist, wobei das erste Kupplungsteil (23) in einer Kupplungsstellung abdichtend am zweiten Kupplungsteil (73) anliegt und in einer Ruhestellung einen Abstand zum zweiten Kupplungsteil (73) einnimmt.

## Beschreibung

Die Erfindung betrifft eine Bearbeitungsmaschine zur Bearbeitung von Behälterrohlingen, wie sie rein exemplarisch aus der EP 2 363 216 B1 bekannt ist.

Bei derartigen Bearbeitungsmaschinen kommen wahlweise hydraulisch betätigte Spannzangen oder pneumatisch betätigte Spannzangen zum Einsatz, wobei pneumatisch betätigte Spannzangen zunehmend eine größere Verbreitung erfahren, da sie aufgrund der Verwendung von Druckluft als Arbeitsmedium einfacher in der Handhabung verglichen mit hydraulisch betätigte Spannzangen sind.

Die Aufgabe der Erfindung besteht darin, eine Bearbeitungsmaschine bereitzustellen, die mit pneumatisch betätigten Spannzangen ausgerüstet ist und für die eine vereinfachte Betätigung der pneumatisch betätigte Spannzangen erzielt werden soll.

Diese Aufgabe wird für eine Bearbeitungsmaschine der eingangs genannten Art dadurch gelöst, dass die Bearbeitungsmaschine einen ersten Maschinenteil und einen als Werkstückrundtisch ausgebildeten zweiten Maschinenteil aufweist, wobei der Werkstückrundtisch drehbar um eine Drehachse am ersten Maschinenteil gelagert ist, und mit einer am ersten Maschinenteil festgelegten Antriebseinrichtung, die für eine Bereitstellung einer Drehschrittbewegung für den Werkstückrundtisch ausgebildet ist, wobei an einer Werkstückoberfläche des Werkstückrundtischs pneumatisch betätigte Spannzangen angebracht sind, die für eine lösbare Festlegung von Behälterrohlingen am Werkstückrundtisch ausgebildet sind, wobei jeder Spannzange ein Pneumatikventil zugeordnet ist, das zwischen einer Belüftungsstellung für die Spannzange und einer Entlüftungsstellung für die Spannzange umschaltbar ist, wobei mehrere Pneumatikventile mit einem am Werkstückrundtisch festgelegten Druckluftspeicher verbunden sind, sowie mit einer Kupplungseinrichtung, die für eine Druckluftversorgung des Druckluftspeichers ausgebildet ist und die ein erstes Kupplungsteil aufweist, das beweglich am ersten Maschinenteil gelagert ist, und die ein zweites Kupplungsteil aufweist, das, insbesondere in einer quer zur Drehachse ausgerichteten Kupplungsebene, gegenüberliegend zum ersten Kupplungsteil am Werkstückrundtisch angeordnet ist, wobei das erste Kupplungsteil in einer Kupplungsstellung abdichtend am zweiten Kupplungsteil anliegt und in einer Ruhestellung einen Abstand zum zweiten Kupplungsteil einnimmt.

Bei den Behälterrohlingen, die mit Hilfe der Bearbeitungsmaschine bearbeitet werden können, handelt es sich vorzugsweise um Rohlinge für eine Aerosoldosen, die eine zumindest im Wesentlichen kreiszylindrische Seitenwand und einen konkav geformten Bodenbereich aufweisen und typischerweise mit einem an dem Bodenbereich angrenzenden Seitenwandabschnitt kraftschlüssig in der jeweiligen Spannzange festgelegt werden.

Für die Festlegung des Behälterrohlings in der Spannzange ist vorgesehen, einen elastisch deformierbaren, insbesondere ringförmig umlaufenden, Bereich der Spannzange in radialer Richtung nach innen auszuwölben, um dadurch einen Innendurchmesser einer zur Aufnahme des Behälterrohlings ausgebildeten Ausnehmung in der Spannzange bereichsweise zu verkleinern.

Beispielhaft ist vorgesehen, dass durch eine Druckluftzufuhr in die Spannzange eine Axialbewegung eines Arbeitskolbens der Spannzange hervorgerufen wird, wodurch ein gummielastischer Haltering, der koaxial angrenzend an den Arbeitskolben angeordnet ist, in axialer Richtung komprimiert wird und dadurch eine Ausweichbewegung in radialer Richtung nach innen durchführt. Alternativ kann vorgesehen sein, dass ein gummielastischen Haltering einen ringförmig umlaufenden Arbeitsraum in der Spannzange radial nach innen begrenzt und durch Druckbeaufschlagung des Arbeitsraums in radialer Richtung nach innen ausgewölbt werden kann.

Die Spannzangen sind vorzugsweise in einer konstanten Winkelteilung und mit einem fest vorgegebenen Abstand von einer Drehachse eines Werkstückrundtischs an einer im Wesentlichen kreisförmigen Werkstückoberfläche des Werkstückrundtischs angebracht. Hierbei sind Erstreckungsachsen, insbesondere Rotationssymmetrieachsen, der zur Aufnahme der Behälterrohlinge in den Spannzangen ausgebildeten, insbesondere kreiszylindrischen, Ausnehmungen jeweils parallel zur Drehachse des Werkstückrundtischs ausgerichtet. Der drehbeweglich an dem ersten Maschinenteil gelagerte Werkstückrundtisch, der auch als zweites Maschinenteil bezeichnet wird, wird bei einem bestimmungsgemäßen Gebrauch der Bearbeitungsmaschine von einer am ersten Maschinenteil festgelegten Antriebseinrichtung in eine Drehschrittbewegung versetzt. Bei der Antriebseinrichtung handelt es sich beispielsweise um einen Servomotor, der unter Zwischenschaltung einer Getriebeeinrichtung für eine Bereitstellung der Drehschrittbewegung des Werkstückrundtischs ausgebildet ist. Bevorzugt ist die Antriebseinrichtung als Direktantrieb, insbesondere als Torquemotor, ausgebildet, der eine getriebelose Bereitstellung der Drehschrittbewegung an den Werkstückrundtisch ermöglicht. Die Drehschrittbewegung für den Werkstückrundtisch ist an die Winkelteilung der Spannzangen angepasst, sodass der Werkstückrundtisch für die Durchführung der Drehschrittbewegung ausgehend von einer vorausgehenden Winkelposition eine Abfolge einer Beschleunigung und einer Abbremsung vollzieht, bis er eine nachfolgende Winkelposition einnimmt, die sich um die Winkelteilung der Spannzangen von der vorausgehenden Winkelposition unterscheidet. Typischerweise führt der Werkstückrundtisch sämtliche Drehschrittbewegung in der gleichen Rotationsrichtung um die Drehachse durch.

Die Aufgabe der Spannzangen besteht unter anderem darin, die bei der Drehschrittbewegung auftretenden Beschleunigungen auf die Behälterrohlinge zu übertragen und dafür zu sorgen, dass sich die Ausrichtung der Behälterrohlingen weder während der Durchführung der Drehschrittbewegung noch während der Durchführung einer Bearbeitung der Behälterrohlingen in den Ruhephasen zwischen den einzelnen Drehschrittbewegung verändert. Eine weitere Aufgabe der Spannzangen besteht darin, die während einer Bearbeitung der Behälterrohlingen auftretenden Bearbeitungskräfte in den Werkstückrundtisch und von dort in den ersten Maschinenteil abzuleiten, sofern keine kontaktlose Bearbeitung der Behälterrohlingen vorgesehen ist.

Für die Durchführung von Bearbeitungsvorgängen mit der Bearbeitungsmaschine ist vorgesehen, dass der Werkstückrundtisch eine Abfolge von Drehschrittbewegungen durchführt, sodass die Spannzangen und die darin aufgenommenen Behälterrohlinge auf einer kreisabschnittsförmigen Bewegungsbahn bewegt werden. Diese Bewegungsbahn erstreckt sich von einer ortsfesten, insbesondere am ersten Maschinenteil angeordneten, Beladestation für die Zufuhr von Behälterrohlingen an den Werkstückrundtisch bis zu einer ortsfesten, insbesondere am ersten Maschinenteil angeordneten, Entladestation für den Abtransport der Behälterrohlinge vom Werkstückrundtisch. Typischerweise ist vorgesehen, dass die Behälterrohlinge an der Beladestation durch eine parallel zur Drehachse ausgerichtete Beladebewegung in die jeweilige Spannzange eingeschoben werden und an der Entladestation durch eine parallel zur Drehachse ausgerichtete Entladebewegung aus der jeweiligen Spannzange entnommen werden. Ferner ist vorgesehen, dass nach des Einschieben des Behälterrohlings in die jeweilige Spannzange eine Festlegung des Behälterrohlings in der Spannzange durch eine Belüftung oder Entlüftung der Spannzange vorgenommen wird. Üblicherweise wird die Festlegung des Behälterrohlings für den kompletten Bewegungswegs zwischen der Beladestation und der Entladestation aufrechterhalten. An der Entladestation erfolgt eine Entlüftung oder Belüftung der Spannzange, um die kraftschlüssige Verbindung zwischen Spannzange und Behälterrohlingen zu lösen und eine reibungsarme Entnahme des Behälterrohlings aus der Spannzange zu ermöglichen. In Abhängigkeit von der Konstruktion der Spannzange wird der Spannvorgang für den Behälterrohling entweder durch eine Belüftung, der Spannzange oder durch eine Entlüftung der Spannzange bewirkt. Hierbei wird unter einer Belüftung eine Druckluftzufuhr an die Spannzange und unter einer Entlüftung eine Druckluftabfuhr von der Spannzange verstanden.

Um die jeweils erforderliche Druckluftzufuhr bzw. Druckluftabfuhr an der Beladestation und an der Entladestation zu ermöglichen, ist jeder Spannzange ein Pneumatikventil zugeordnet, dass zwischen einer Belüftungsstellung und einer Entlüftungsstellung umgeschaltet werden kann. Bevorzugt handelt es sich bei dem Pneumatikventil um ein Schaltventil, das in Abhängigkeit von einer äußeren Energiezufuhr wahlweise zwischen der Belüftungsstellung und der Entlüftungsstellung umgeschaltet werden kann. Vorzugsweise ist das Pneumatikventil als 3/2-Wegeventil ausgebildet, das zwischen der Belüftungsstellung und der Entlüftungsstellung umgeschaltet werden kann.

Alternativ ist das Pneumatikventil beispielhaft als 3/3-Wegeventil ausgebildet, das zusätzlich zur Belüftungsstellung und zur Entlüftungsstellung eine Sperrstellung aufweist, bei der kein Druckluftstrom in die Spannzange oder aus der Spannzange stattfindet.

Um eine vorteilhafte Druckluftversorgung für die Spannzangen zu ermöglichen, ist am Werkstückrundtisch wenigstens ein Druckluftspeicher angebracht, der mit mehreren Pneumatikventilen fluidisch kommunizierend verbunden ist, sodass die mit den Pneumatikventilen verbundenen Spannzangen in Abhängigkeit von einer Schaltstellung des jeweiligen Pneumatikventils mit Druckluft versorgt werden können. Bevorzugt ist vorgesehen, dass alle am Werkstückrundtisch angeordneten Pneumatikventile mit einem am Werkstückrundtisch angebrachten Druckluftspeicher oder mit mehreren am Werkstückrundtisch angebrachten Druckluftspeichern fluidisch kommunizierend verbunden sind.

Um eine Bereitstellung von Druckluft an dem wenigstens einen Druckluftspeicher zu ermöglichen, ohne dass hierfür eine technisch aufwendige und wartungsintensive Drehdurchführung zwischen dem ersten Maschinenteil und dem als Werkstückrundtisch ausgebildeten zweiten Maschinenteil erforderlich ist, weist die Bearbeitungsmaschine eine Kupplungseinrichtung auf, die für eine zeitweilige fluidisch kommunizierende Verbindung zwischen dem ersten Maschinenteil und dem zweiten Maschinenteil ausgebildet ist. Hierzu umfasst die Kupplungseinrichtung ein erstes Kupplungsteil, das beweglich am ersten Maschinenteil gelagert ist, und ein zweites Kupplungsteil, dass am Werkstückrundtisch angebracht ist. Hierbei ist vorgesehen, dass das erste Kupplungsteil zwischen einer Ruhestellung, in der ein Abstand zum zweiten Kupplungsteil vorliegt, und einer Kupplungsstellung, in der das erste Kupplungsteil abdichtend und fluidisch kommunizierend am zweiten Kupplungsteil anliegt, bewegt werden kann. Da sich das am Werkstückrundtisch angebrachte zweite Kupplungsteil in gleicher Weise wie die Spannzangen auf einer konzentrisch zur Drehachse ausgerichteten Kreisbahn bewegt, ist das erste Kupplungsteil derart am ersten Maschinenteil angebracht, dass es zumindest in einer Rotationsstellung, die der Werkstückrundtisch zwischen der Durchführung von aufeinanderfolgenden Drehschrittbewegungen einnimmt, genau gegenüberliegend zum zweiten Kupplungsteil angeordnet ist. Bevorzugt ist vorgesehen, dass das erste Kupplungsteil längs eines parallel zur Drehachse ausgerichteten Bewegungswegs beweglich ist. Besonders bevorzugt ist vorgesehen, dass mehrere zweite Kupplungsteile vorgesehen sind, die insbesondere in einer quer zur Drehachse ausgerichteten Kupplungsebene gegenüberliegend zum ersten Kupplungsteil am Werkstückrundtisch angeordnet sind.

Vorteilhafte Weiterbildungen der Erfindung sind Gegenstand der Unteransprüche.

Zweckmäßig ist es, wenn am ersten Maschinenteil ein Antriebsgehäuse eines Linearantriebs angebracht ist und dass das erste Kupplungsteil an einer Koppelstange des Linearantriebs angebracht ist, die für eine lineare, insbesondere parallel zur Rotationsachse ausgerichtete, Relativbewegung gegenüber dem Antriebsgehäuse ausgebildet ist, um das erste Kupplungsteil zwischen der Ruhestellung und der Kupplungsstellung zu bewegen.

Der Linearantrieb ist zur Bereitstellung einer linearen Arbeitsbewegung ausgebildet und kann beispielsweise als Hydraulikzylinder, als elektrischer Lineardirektantrieb oder als elektrischer Gewindespindelantrieb ausgebildet sein. In jedem Fall ist vorgesehen, dass der Linearantrieb ein Antriebsgehäuse und eine relativbeweglich am oder zumindest teilweise im Antriebsgehäuse gelagerte Koppelstange aufweist, die durch Bereitstellung von Energie an den Linearantrieb eine Positionsänderung gegenüber dem Antriebsgehäuse durchführen kann. Typischerweise ist vorgesehen, dass das Antriebsgehäuse am ersten Maschinenteil angebracht ist und dass das erste Kupplungsteil an der Koppelstange angebracht ist. Alternativ ist die Koppelstange am ersten Maschinenteil angebracht und das Antriebsgehäuse ist mit dem ersten Kupplungsteil verbunden. Bevorzugt ist vorgesehen, dass die Linearbewegung der Koppelstange relativ zum Antriebsgehäuse längs einer Bewegungsgeraden erfolgt, die parallel zur Drehachse des Werkstückrundtischs ausgerichtet ist. In diesem Fall kann ferner vorgesehen sein, dass eine erste Kupplungsfläche des ersten Kupplungsteils und eine zweite Kupplungsfläche des zweiten Kupplungsteils jeweils in zueinander parallelen Ebenen liegen, die quer zur Drehachse ausgerichtet sind.

Alternativ kann vorgesehen sein, dass das erste Kupplungsteil zwischen der Ruhestellung und der Kupplungsstellung eine Schwenkbewegung auf einer gekrümmten Bahn, insbesondere einem Kreisbahnabschnitt, oder eine Schraubbewegung als Kombination einer Schwenkbewegung und einer Linearbewegung durchführt.

Vorteilhaft ist es, wenn dem ersten Kupplungsteil ein Fluidventil zugeordnet ist, das für eine Bereitstellung von Druckluft vom ersten Kupplungsteil an das zweite Kupplungsteil ausgebildet ist, wenn das erste Kupplungsteil in der Kupplungsstellung angeordnet ist. Um eine möglichst effiziente Ausnutzung von Druckluft, die für die Betätigung der Spannzangen erforderlich ist, gewährleisten zu können, ist eine Druckluftbereitstellung nur für den Fall vorgesehen, dass das erste Kupplungsteil abdichtend am zweiten Kupplungsteil anliegt. Hierzu ist in einer Druckluftversorgungsleitung, die sich zwischen einer Druckluftquelle und dem ersten Kupplungsteil erstreckt, ein Fluidventil angeordnet, das zwischen einer Sperrstellung und einer Freigabestellung geschaltet werden kann. Vorzugsweise handelt es sich bei dem Fluidventil um ein Schaltventil, beispielsweise um ein 2/2-Wegeventil oder ein 3/2-Wegeventil, insbesondere um ein elektrisch ansteuerbares Magnetventil. Alternativ kann auch ein Proportionalventil verwendet werden, um den Druckluftstrom zwischen dem ersten Kupplungsteil und dem zweiten Kupplungsteil zu beeinflussen. Bevorzugt ist vorgesehen, dass die Umschaltung des Fluidventils zwischen der Sperrstellung und der Freigabestellung in Abhängigkeit von der Position des ersten Kupplungsteils vorgenommen wird, sodass das Fluidventil nur für den Fall in die Freigabestellung überführt wird, dass eine minimale Abstand zwischen dem ersten Kupplungsteil und dem zweiten Kupplungsteil vorliegt. Besonders bevorzugt ist vorgesehen, dass eine Koordination zwischen einer Ansteuerung des Linearantriebs und einer Ansteuerung des Fluidventil durch eine elektrische oder elektronische Steuerung vorgenommen wird, die dem ersten Maschinenteil zugeordnet ist.

Bevorzugt ist vorgesehen, dass der Linearantrieb als Pneumatikzylinder, insbesondere als doppeltwirkender Pneumatikzylinder, ausgebildet ist und dass dem Linearantrieb ein Steuerventil zugeordnet ist, das für eine Steuerung einer Fluidversorgung für den Linearantrieb ausgebildet ist. Die Verwendung eines Pneumatikzylinders ist vorteilhaft, da für die Betätigung der Spannzangen ohnehin eine Druckluftversorgung der Bearbeitungsmaschine vorzusehen ist. Prinzipiell kann ein einfachwirkender Pneumatikzylinder dazu eingesetzt werden, das erste Kupplungsteil zwischen der Ruhestellung und der Kupplungsstellung zu bewegen. In diesem Fall führt der Pneumatikzylinder bei einer Druckbeaufschlagung eine Relativbewegung einer Kolbenstange gegenüber einem Zylindergehäuse in einer ersten Raumrichtung längs der Bewegungsgeraden durch, während eine Bewegung der Kolbenstange gegenüber dem Zylindergehäuse in einer zweiten Raumrichtung, die der ersten Raumrichtung entgegengesetzt ist, durch eine interne oder externe Rückstelleinrichtung, insbesondere eine Federanordnung, bewirkt wird. Bevorzugt ist vorgesehen, dass der Linearantrieb als doppeltwirkender Pneumatikzylinder ausgebildet ist, bei dem die Kolbenstange in beiden, zueinander entgegengesetzten Raumrichtungen durch Druckbeaufschlagung eines ersten Arbeitsraums und eines zweiten Arbeitsraums, die im Pneumatikzylinder ausgebildet sind, bewegt werden kann. Für eine Belüftung und Entlüftung wenigstens eines Arbeitsraums, vorzugsweise zweier Arbeitsräume, des Pneumatikzylinders ist ein Steuerventil vorgesehen, bei dem es sich in Abhängigkeit von der Ausgestaltung des Pneumatikzylinders beispielsweise um ein 3/2-Wegeventil für einen einfachwirkenden Pneumatikzylinder oder um ein 5/2-Wegeventil oder um eine Kombination von zwei 3/2-Wegeventilen für einen doppeltwirkenden Pneumatikzylinder handeln kann. Das Steuerventil kann als Schaltventil oder als Proportionalventil ausgebildet sein und für eine elektrische Ansteuerung, insbesondere für eine elektromagnetische Ansteuerung, vorgesehen sein.

Bei einer Weiterbildung der Erfindung ist vorgesehen, dass der erste Maschinenteil einen Maschinenrahmen und einen linearbeweglich längs der Drehachse gelagerten Werkzeugrundtisch aufweist, wobei der Werkzeugrundtisch eine gegenüberliegend zur Werkstückoberfläche angeordnete Werkzeugoberfläche aufweist, an der mehrere Werkzeugaufnahmen in gleicher Winkelteilung wie die Winkelteilung der Spannzangen angeordnet sind. Bei einer derartigen Ausgestaltung der Bearbeitungsmaschine ist vorgesehen, dass zwischen dem Werkstückrundtisch und dem Werkzeugrundtisch eine längs der Drehachse ausgerichtete lineare Hubbewegung, die auch als Oszillationsbewegung bezeichnet wird, durchgeführt wird. Vorzugsweise ist vorgesehen, dass der Werkzeugrundtisch ausschließlich zur Durchführung der linearen Hubbewegung ausgebildet ist und dass der Werkstückrundtisch ausschließlich die Drehschrittbewegung um die Drehachse durchführt, womit erreicht werden kann, dass in den Spannzangen aufgenommene Behälterrohlinge sequenziell in Kontakt mit den am Werkzeugrundtisch aufgenommenen Bearbeitungswerkzeugen gelangen.

In weiterer Ausgestaltung der Erfindung ist vorgesehen, dass wenigstens eine Komponente aus der Gruppe: Linearantrieb mit erstem Kupplungsteil, Steuerventil, Fluidventil, Impulsgeber, elektrische Ventilsteuerung, an dem Werkzeugrundtisch, insbesondere auf der Werkzeugoberfläche, angeordnet ist. Hierdurch werden kurze fluidische Verbindungen, insbesondere Schlauchleitungen, zwischen den Ventilen und den zugeordneten Fluidverbrauchern ermöglicht. Neben den Linearantrieben zur Bewegung der ersten Kupplungsteile sind hierbei insbesondere fluidische Impulsgeber zu erwähnen, die zur Bereitstellung eines kurzen Druckluftstoßes eingesetzt werden, mit denen die Pneumatikventile, die den Spannzangen zugeordnet sind, umgeschaltet werden können. Bevorzugt ist vorgesehen, dass zwischen dem Maschinenrahmen und dem Werkzeugrundtisch eine elektrische Verbindung sowie eine Druckluftverbindung vorliegt, über die sowohl eine elektrische Versorgung einer elektrischen Ventilsteuerung als auch eine Druckluftversorgung dieser Ventilsteuerung gewährleistet werden kann. Die auch als Ventilinsel bezeichnete Ventilsteuerung beinhaltet neben einer elektronischen Steuereinheit eine Mehrzahl von Ventilen, mit denen Druckluftströme an die Druckluftverbraucher, die dem Werkzeugrundtisch zugeordnet sind, beeinflusst werden können. Bevorzugt ist vorgesehen, dass die Ventilsteuerung über eine Kommunikationsleitung, insbesondere über eine Buskommunikationsleitung, mit einer Maschinensteuerungen der Bearbeitungsmaschine, insbesondere einer speicherprogrammierbaren Steuerung, kommuniziert.

Zweckmäßig ist es, wenn die Werkzeugaufnahme zur Aufnahme von Bearbeitungswerkzeugen aus der Gruppe: Einziehwerkzeug, Fräswerkzeug, Bördelwerkzeug, Rollwerkzeug, ausgebildet ist. Hierbei handelt es sich um Bearbeitungswerkzeuge, die typischerweise bei einer Einziehmaschine eingesetzt werden. Mit einer Einziehmaschine erfolgt eine Bearbeitung eines Endbereichs des Behälterrohlings, um beispielsweise bei einer späteren Verwendung des Behälterrohlings als Aerosoldose ein Ventil auf den Behälterrohling aufsetzen zu können.

Bevorzugt ist vorgesehen, dass am ersten Maschinenteil mehrere Arbeitsstationen, insbesondere aus der Gruppe: Druckstation, Aktivierungsstation, Aushärtungsstation, angeordnet sind, die für eine Bearbeitung einer Seitenfläche eines in der Spannzange aufgenommenen Behälterrohlings ausgebildet sind. Derartige Arbeitsstationen zur Dekoration einer Seitenfläche des Behälterrohlings im Tintenstrahldruckerverfahren verwendet, sodass es sich bei der Bearbeitungsmaschine um eine Digitaldruckmaschine handelt.

In weiterer Ausgestaltung der Erfindung ist vorgesehen, dass die zweiten Kupplungsteile an der Werkstückoberfläche des Werkstückrundtischs angeordnet sind. Diese Anordnung der zweiten Kupplungsteil ist von Vorteil, wenn gegenüberliegend zur Werkstückoberfläche des Werkstückrundtischs eine Werkzeugoberfläche eines Werkzeugrundtischs angeordnet ist, wie dies insbesondere bei einer Einziehmaschine der Fall ist. Aufgrund der Oszillationsbewegung, die der Werkzeugrundtisch gegenüber dem Werkstückrundtisch durchführt, findet eine permanente Veränderung eines Abstands zwischen dem Werkzeugrundtisch und dem Werkstückrundtisch statt, die insbesondere durch eine Sinuskurve beschrieben werden kann. Prinzipiell könnte in Erwägung gezogen werden, die Druckluftübertragung zwischen dem ersten Kupplungsteil und dem zweiten Kupplungsteil während einer Zeitspanne durchzuführen, in der ein Abstand zwischen dem Werkzeugrundtisch und dem Werkstückrundtisch minimal ist. Allerdings ist diese Zeitspanne bei einer Oszillationsfrequenz für die Hubbewegung des Werkzeugrundtischs, die beim bestimmungsgemäßen Gebrauch der Bearbeitungsmaschine bis zu 5 Hz betragen kann, sehr klein. Eine Verlängerung dieser Zeitspanne könnte dadurch erzielt werden, dass das erste Kupplungsteil an einer, beispielsweise federvorgespannte, Linearführung aufgenommen ist und bereits vor Erreichen des minimalen Abstand zwischen Werkzeugrundtisch und Werkstückrundtisch in abdichtenden Kontakt mit dem zweiten Kupplungsteil kommt. Bei einer derartigen Ausgestaltung der Kupplungseinrichtung könnte auf einen Aktor, insbesondere einen Linearaktor, verzichtet werden.

Bei einer vorteilhaften Weiterbildung der Erfindung ist vorgesehen, dass die Pneumatikventile für eine kontaktlose Umschaltung zwischen der Belüftungsstellung und der Entlüftungsstellung ausgebildet sind und/oder dass die Pneumatikventile an der Werkstückoberfläche des Werkstückrundtischs angeordnet sind. Unter einer kontaktlosen Umschaltung soll verstanden werden, dass kein mechanischer Kontakt zwischen dem Pneumatikventil und einer zur Ansteuerung des Pneumatikventils vorgesehenen Vorrichtung vorliegt. Beispielhaft ist vorgesehen, dass eine Umschaltung des Pneumatikventils über einen Druckluftstoß erfolgt, der von einem gegenüberliegend zum Pneumatikventil angeordneten Impulsgeber bereitgestellt wird. Alternativ kann eine kontaktlose induktive oder magnetische Umschaltung des Pneumatikventils vorgesehen werden, bei der ein gegenüberliegend zum Pneumatikventil angeordneter Impulsgeber einen magnetischen Fluss bereitstellt, der entweder von einer elektrischen Spulenanordnung oder von einem Permanentmagneten hervorgerufen wird.

Bevorzugt ist vorgesehen, dass die Pneumatikventile auf einem konzentrisch zur Drehachse ausgerichteten ersten Kreis angeordnet sind und dass wenigstens ein Impulsgeber am ersten Maschinenteil angeordnet ist, der zur Ansteuerung der Pneumatikventile ausgebildet ist und der auf einem konzentrisch zur Drehachse ausgerichteten zweiten Kreis angeordnet ist, wobei der erste Kreis und der zweite Kreis, insbesondere im Wesentlichen, den gleichen Durchmesser aufweisen. Hierdurch wird gewährleistet, dass der wenigstens eine Impulsgeber derart gegenüberliegend zu den Pneumatikventilen angeordnet ist, dass bei einem minimalen Abstand zwischen dem Werkzeugrundtisch und dem Werkstückrundtisch, der typischerweise mit einer Ruhephase für den Werkzeugrundtisch zwischen zwei aufeinanderfolgenden Drehschrittbewegungen einhergeht, die zur Umschaltung des Pneumatikventils erforderliche Impulsübertragung vorgenommen werden kann.

Vorteilhaft ist es, wenn am Werkstückrundtisch mehrere zweite Kupplungsteile in einer Winkelteilung angeordnet sind, die einer Winkelteilung der Spannzangen entspricht. Hierdurch wird gewährleistet, dass in jeder Ruheposition des Werkstückrundtischs eine fluidisch kommunizierende Verbindung der Kupplungseinrichtung erzielt werden kann.

Bevorzugt ist vorgesehen, dass am ersten Maschinenteil, insbesondere am Werkzeugrundtisch, wenigstens zwei erste Kupplungsteile in einer Winkelteilung angeordnet sind, die einer halben Winkelteilung der Spannzangen entspricht.

Zweckmäßig ist es, wenn in einer Fluidleitung, die sich vom zweiten Kupplungsteil zum Druckluftspeicher erstreckt, ein Rückschlagventil angeordnet ist, das für eine Freigabe der Fluidleitung bei Vorliegen einer positiven Druckdifferenz zwischen dem zweiten Kupplungsteil und dem Druckluftspeicher ausgebildet ist. Mit den Rückschlagventil wird in einfacher Weise sichergestellt, dass ein im Druckluftspeichers vorliegender Überdruck nur an die Spannzangen bereitgestellt wird und nicht nach einer Abkopplung des ersten Kupplungsteils in die Umgebung entweicht.

Bei einer vorteilhaften Weiterbildung der Erfindung ist vorgesehen, dass ein Produkt aus einer Anzahl der ersten Kupplungsteile und einer Anzahl der zweiten Kupplungsteile mindestens einer Anzahl der Spannzangen am Werkstückrundtisch entspricht.

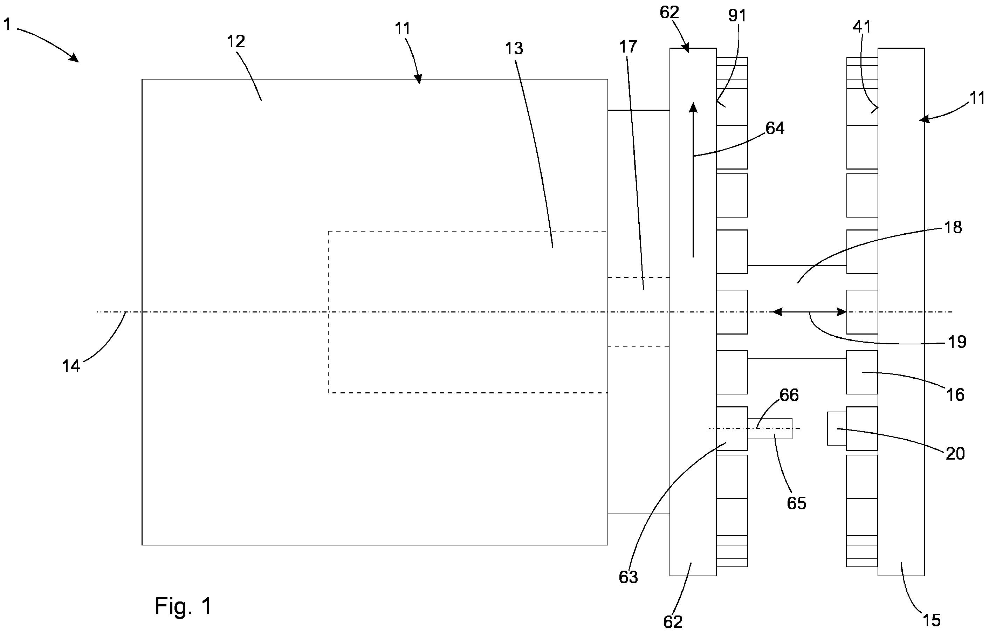

Eine vorteilhafte Ausführungsform der Erfindung wird in der Zeichnung dargestellt. Hierbei zeigt:
- Figur 1: eine streng schematische Draufsicht auf eine als Einziehmaschine ausgebildete Bearbeitungsmaschine, die einen ersten Maschinenteil mit einem Maschinenrahmen und einem Werkzeugrundtisch und einen zweiten Maschinenteil mit einem Werkstückrundtisch aufweist,
- Figur 2: eine streng schematische Vorderansicht des Werkstückrundtischs,
- Figur 3: eine streng schematische Vorderansicht des Werkzeugrundtischs,
- Figur 4: eine streng schematische Darstellung einer Kupplungseinrichtung.
Eine in der Figur 1 nur schematisch gezeigte Bearbeitungsmaschine 1 ist rein exemplarisch als Einziehmaschine ausgebildet, die für eine Bearbeitung von Behälterrohlingen 65 ausgebildet ist. Aus Gründen der Übersichtlichkeit ist in der Darstellung der Figur 1 nur ein einziger Behälterrohling 65 eingezeichnet, der in einer der Spannzangen 63 eines Werkstückrundtischs 62 kraftschlüssig festgelegt ist. Gegenüberliegend zum Werkstückrundtisch 62, der bei einem bestimmungsgemäßen Gebrauch der Bearbeitungsmaschine 1 eine Drehschrittbewegung um eine Drehachse 14 in einer Drehrichtung 64 durchführt, ist ein Werkzeugrundtisch 15 angeordnet, der zur Durchführung einer linearen Oszillationsbewegung 19 ausgebildet ist. Der Werkzeugrundtisch 15 ist mit Werkzeugaufnahmen 16 versehen, die in gleicher Winkelteilung wie die Spannzangen 63 am Werkstückrundtisch 62 angeordnet sind. Rein exemplarisch ist in einer der Werkzeugaufnahmen 16 ein Bearbeitungswerkzeug 20 angeordnet, bei dem es sich um ein nur schematisch dargestelltes Einziehwerkzeug zur plastischen Deformation des Behälterrohlings 65 handelt.

Die Bearbeitungsmaschine 1 kann schematisch in einen ersten Maschinenteil 11 und einen zweiten Maschinenteil 61 untergliedert werden. Hierbei wird die Untergliederung der Bearbeitungsmaschine 1 für die nachstehende Beschreibung so gewählt, dass der erste Maschinenteil 11 einen Maschinenrahmen 12 mit einer darin aufgenommenen, nur schematisch gezeigten Antriebseinrichtung 13 sowie den Werkzeugrundtisch 15 mit den daran aufgenommenen Werkzeugaufnahmen 16 und ein mit dem Werkzeugrundtisch 15 verbundenes Führungsrohr 18 umfasst. Der zweite Maschinenteil 61 umfasst den Werkstückrundtisch 62 mit den daran aufgenommenen Spannzangen 63.

Die dem ersten Maschinenteil zugehörige Antriebseinrichtung 13 ist beispielsweise als Elektromotor ausgebildet und weist eine drehbeweglich um die Drehachse 14 gelagerte Antriebswelle 17 auf, die stirnseitig mit dem Werkstückrundtisch 62 verbunden ist. Bei einer Bereitstellung von elektrischer Energie an die Antriebseinrichtung 13 wird eine Rotation der Antriebswelle 17 und des damit verbundenen Werkstückrundtischs 62 in der Drehrichtung 64 verbunden. Diese Bereitstellung von elektrischer Energie an die Antriebseinrichtung 13 erfolgt dergestalt, dass der Werkstückrundtisch 62 eine Drehschrittbewegung durchführt, bei der sich der Werkstückrundtisch 62 jeweils ausgehend von einer Ruheposition eine Schwenkbewegung um einen vorgegebenen, der Winkelteilung der Spannzangen 63 entsprechenden, Winkelbetrag durchführt, um eine neue Ruheposition einzunehmen. Hierbei ist vorgesehen, dass in der jeweiligen Ruheposition eine koaxiale Ausrichtung der Spannzangen 63 mit den darin aufgenommenen Behälterrohlings 65 und der Werkzeugaufnahmen 16 mit dem darin aufgenommenen Bearbeitungswerkzeugs 20 gewährleistet ist.

Durch die Oszillationsbewegung 19, die von einer weiteren, in der Figur 1 nicht dargestellten Antriebseinrichtung auf den Werkzeugrundtisch 15 eingeleitet wird, findet ausgehend von der in der Figur 1 gezeigten Stellung des Werkzeugrundtischs 15 eine Annäherung an den Werkstückrundtisch 62 statt. Hierbei gelangt das Bearbeitungswerkzeug 20 in Eingriff mit einem der Spannzangen 63 abgewandten Endbereich des Behälterrohlings 65 und kann diesen beispielsweise um einen geringen Betrag plastisch deformieren. Bei einem bestimmungsgemäßen Betriebsweise für die Bearbeitungsmaschine 1 sind mehrere der Werkzeugaufnahmen 16 mit Bearbeitungswerkzeugen 20 ausgerüstet, sodass im Zuge einer Oszillationsbewegung des Werkzeugrundtischs 15 auch mehrere gegenüberliegend angeordnete Behälterrohlingen 65 bearbeitet werden können. Aufgrund der Synchronisation zwischen der Oszillationsbewegung 19 für den Werkzeugrundtisch 15 und der Bewegung um die Drehachse 14 für den Werkstückrundtisch 62 gelangen die am Werkstückrundtisch 62 aufgenommenen Behälterrohling 65 in einer sequenziellen Abfolge in Kontakt mit den am Werkzeugrundtisch 15 aufgenommenen Bearbeitungswerkzeugs 20 und können dadurch schrittweise bearbeitet, insbesondere plastisch deformiert, werden.

Die zur Aufnahme der Behälterrohlingen 65 am Werkstückrundtisch 62 angebrachten Spannzangen 63 sind für eine pneumatische Ansteuerung ausgebildet. Beispielhaft ist vorgesehen, dass die Spannzangen 63 durch eine Beaufschlagung mit Druckluft aus einer Freigabestellung, in der ein Behälterrohling 65 reibungsarm in die Spannzange 63 eingeschoben oder aus der Spannzangen 63 entnommen werden kann, in eine Blockierstellung überführt werden kann, in der Behälterrohling 65 kraft schlüssig in der Spannzange 63 aufgenommen ist. Alternativ ist vorgesehen, dass die Spannzangen 63 durch eine Beaufschlagung mit Druckluft aus einer Blockierstellung in eine Freigabestellung überführt werden können.

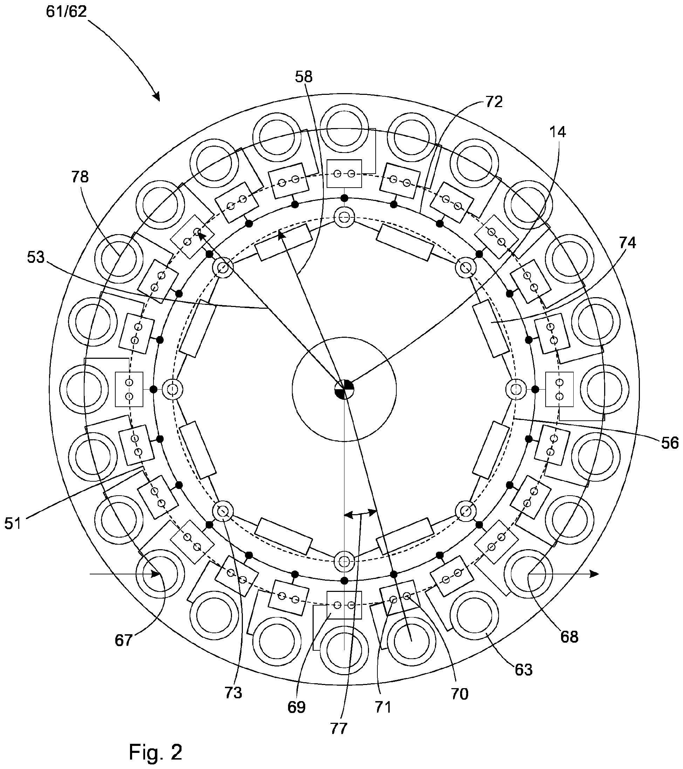

In jedem Fall ist es für eine qualitativ hochwertige Bearbeitung der Behälterrohlinge 65 notwendig, dass bei einer Zuführung der Behälterrohlinge 65 an den Werkstückrundtisch 62, die gemäß der Darstellung der Figur 2 an einer Beladeposition 67 vorgenommen wird, eine möglichst geringe Reibung zwischen Behälterrohling 65 und Spannzange 63 beim Einschieben des Behälterrohlings 65 längs der Behälterachse 66 du parallel zur Drehachse 14 in die Spannzange 63 gewährleistet ist. Bei der anschließenden Bewegung des Behälterrohlings 65 längs eines kreisabschnittsförmig ausgebildeten Bewegungswegs 69 in Richtung einer Entladeposition 68 muss hingegen sichergestellt sein, dass die auftretenden Bearbeitungskräfte und Beschleunigungskräfte nicht zu einer Positionsveränderung zwischen Behälterrohling 65 und Spannzange 63 führen. An der Entladeposition 68 ist für den Entnahmevorgang des Behälterrohlings 65 erneut eine reibungsarme lineare Relativbewegung längs der Behälterachse 66 zwischen dem Behälterrohling 65 und der Spannzange 63 zu gewährleisten. Um diese Anforderungen erfüllen zu können, sind die Spannzangen 63 jeweils mit individuell zugeordneten Pneumatikventilen 69 fluidisch kommunizierend verbunden, mit denen eine Druckluftzufuhr zur jeweiligen Spannzange 63 wahlweise freigegeben oder blockiert werden kann. Beispielhaft sind die Pneumatikventile 69 für eine kontaktlose Umschaltung zwischen einer 63 und einer Entlüftungsstellung für die Spannzange 63 ausgebildet. Diese kontaktlose Umschaltung erfolgt rein exemplarisch durch Druckluftstöße, die jeweils an eine von zwei am jeweiligen Pneumatikventil 69 ausgebildeten Steueröffnungen 70, 71 bereitgestellt werden.

Aus Gründen der Übersichtlichkeit ist in der Darstellung der Figur 2 lediglich die Druckluftversorgung für die Pneumatikventile 69 eingezeichnet, in der Praxis weist jedes der Pneumatikventile 69 auch einen Auslassanschluss auf, an dem beispielsweise ein nicht dargestellter Schalldämpfer angeschlossen werden kann, um eine Geräuschentwicklung bei der Umschaltung von der Belüftungsstellung in die Entlüftungsstellung und dem daraus resultierenden Ausströmen von Druckluft aus der Spannzange 63 durch das Pneumatikventil 69 zu bedämpfen.

Die Druckluftversorgung für den Pneumatikventile 69 erfolgt rein exemplarisch durch eine Ringleitung 72, an die sämtliche Pneumatikventile 69 fluidisch kommunizierend angeschlossen sind. Diese Ringleitung 72 ist ihrerseits mit zweiten Kupplungsteilen 73 fluidisch kommunizierend verbunden, wobei diese zweiten Kupplungsteile 73 nachstehend näher beschrieben werden. Ferner sind jeweils zwischen benachbart angeordneten zweiten Kupplungsteilen 73 jeweils Druckluftspeicher 74 fluidisch kommunizierend angebunden, die ein nicht näher dargestelltes Speichervolumen für Druckluft aufweisen.

Die zweiten Kupplungsteile 73 bilden zusammen mit ersten Kupplungsteilen 23 eine Kupplungseinrichtung 22, mit der eine Druckluftzufuhr vom ersten Maschinenteil 11, insbesondere vom Werkzeugrundtisch 15 an den Werkstückrundtisch 62 durchgeführt werden kann.

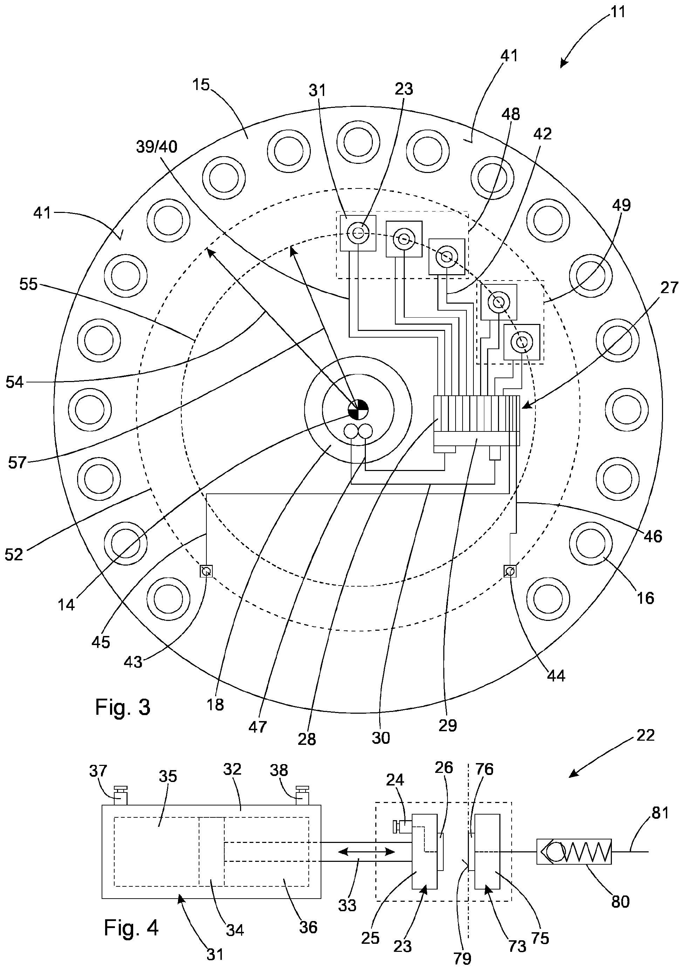

Wie der rein schematischen Darstellung der Figur 4 entnommen werden kann, handelt es sich bei dem zweiten Kupplungsteil 73 um eine Kombination einer zweiten Kupplungsplatte 75, einer zweiten Ringdichtung 76 und einem Rückschlagventil 80, das in einer Fluidleitung 81 angeordnet ist, die mit den jeweiligen Druckluftspeichern 74 und der Ringleitung 72 fluidisch kommunizierend verbunden ist. Eine der ersten Ringdichtung 26 zugewandte Vorderseite der zweiten Ringdichtung 76 bestimmt hierbei eine quer zur Drehachse 14 ausgerichtete Dichtebene 79, in der die abdichtende Anlage der ersten Ringdichtung 26 vorgesehen ist. Das Rückschlagventil 80 ist derart angeordnet, dass es grundsätzlich in einer Sperrstellung befindlich ist, aus der es lediglich für den Fall in eine Öffnungsstellung überführt wird, sofern ausgehend vom ersten Kupplungsteil 23 ein Überdruck an das zweite Kupplungsteil 73 zur Verfügung gestellt wird. Das zweite Kupplungsteil 73 ist ortsfest an einer rein exemplarisch kreisrunden Werkstückoberfläche 91 des Werkstückrundtischs 62 angebracht, an der auch die Spannzangen 63 festgelegt sind.

Wie der Darstellung der Figur 2 entnommen werden kann, sind die Spannzangen 63 mit einer konstanten Winkelteilung bezüglich der Drehachse 14 auf der Werkstückoberfläche 91 angeordnet. Rein exemplarisch ist der Werkstückrundtisch 62 mit vierundzwanzig Spannzangen 63 bestückt, so das benachbart zueinander angeordnete Spannzangen 63 bezogen auf die Drehachse 14 jeweils in einem Winkel 77, der 15 Grad beträgt, angeordnet sind. Dementsprechend führt der Werkstückrundtisch 62 jeweils Bewegungen mit einem Winkelbetrag von 15 Grad aus.

Um eine vorteilhafte Druckluftversorgung für die Spannzangen 63 gewährleisten zu können sind an der Werkstückoberfläche 91 insgesamt acht in gleicher Winkelteilung angeordnete zweite Kupplungsteile 73 vorgesehen, die in fluidisch kommunizierende Verbindung mit den nachstehend näher beschriebenen ersten Kupplungsteilen 23 gebracht werden können.

Wie der schematischen Darstellung der Figur 4 weiter entnommen werden kann, wird das erste Kupplungsteil 23 im Wesentlichen von einer ersten Kupplungsplatte 25 mit einer Ringdichtung 26 gebildet, wobei die erste Kupplungsplatte 25 rein exemplarisch an einer axialen Stirnfläche einer als Koppelstange dienenden Kolbenstange 33 eines Linearantriebs 31 angebracht ist. An einer dem zweiten Kupplungsteil 73 abgewandten Rückseite des ersten Kupplungsteils 23 ist ein rein exemplarisch als Schlauchanschluss ausgebildeter Fluidanschluss 24 vorgesehen, der gemäß der Darstellung der Figur 3 über eine Fluidleitung 42 mit einer Ventilscheibe 28 einer Ventilinsel 27 fluidisch kommunizierend verbunden ist.

Der Linearantrieb 31 umfasst ein rein exemplarisch quaderförmig ausgebildetes, auch als Antriebsgehäuse bezeichnetes Zylindergehäuse 32, das in nicht näher dargestellter Weise an einer Werkzeugoberfläche 41 des Werkzeugrundtischs 15 festgelegt ist. Dabei ist die Kolbenstange 33 parallel zur Drehachse 14 ausgerichtet und mit einem Arbeitskolben 34 verbunden, der in einer Zylinderausnehmung des Zylindergehäuses 32 linearbeweglich aufgenommen ist. Hierbei trennt der Arbeitskolben 34 einen ersten größenvariablen Arbeitsraum 35 von einem zweiten größenvariablen Arbeitsraum 36, die jeweils über zugeordnete Arbeitsanschlüsse 37, 38 belüftet und entlüftet werden können, um eine lineare Bewegung des Arbeitskolbens 34 hervorzurufen. Die Arbeitsanschlüsse 37, 38 sind über Fluidleitungen 39, 40, die in der schematischen Darstellung der Figur 3 als gemeinsame Leitung eingezeichnet sind, mit einer Ventilscheibe 28 der Ventilinsel 27 verbunden.

Die Ventilinsel 27 umfasst neben den Ventilscheiben 28 eine Ventilsteuerung 29, die für eine gezielte Ansteuerung der Ventilscheiben 28 ausgebildet ist. Beispielhaft ist vorgesehen, dass die Ventilscheiben 28, die fluidisch kommunizierend mit den ersten Kupplungsteilen 23 verbunden sind und die für die Freigabe oder Blockierung von Druckluft für die ersten Kupplungsteile 23 vorgesehen sind, jeweils als 2/2-Wegeventile, insbesondere als Magnetventile, ausgebildet sind. Ferner kann rein exemplarisch vorgesehen sein, dass die Ventilscheiben 28, die über die Fluidleitungen 39, 40 fluidisch kommunizierend mit den Linearantrieben 31 verbunden sind, jeweils als 5/2-Wegeventile ausgebildet sind. Die Ventilinsel 27 steht über eine Versorgungsleitung 30, die sich durch das Führungsrohr 18 hindurch in der Maschinenrahmen 12 erstreckt, mit einer nicht dargestellten, dem Maschinenrahmen 12 zugeordneten Druckluftquelle in fluidisch kommunizierende Verbindung. Ferner steht die Ventilinsel 27 über eine Kommunikationsleitung 47, die sich durch das Führungsrohr 18 hindurch in den Maschinenrahmen 12 erstreckt, mit einer nicht dargestellten, dem Maschinenrahmen 12 zugeordneten Maschinensteuerung, insbesondere einer speicherprogrammierbaren Steuerung, in elektrischer Verbindung.

Ferner ist vorgesehen, dass die Ventilinsel 27 zwei weitere Ventilscheiben 28 aufweist, die über Fluidleitungen 45, 46 mit einem ersten Impulsgeber 43 bzw. einem zweiten Impulsgeber 44 verbunden sind.

Die Aufgabe des ersten Impulsgebers 43 besteht darin, bei Vorliegen eines minimalen Abstands zwischen dem Werkzeugrundtisch 15 und dem Werkstückrundtisch 62 einen Druckluftimpuls an die erste Steueröffnung 70 desjenigen Pneumatikventils 69 bereitzustellen, das sich an der Beladeposition 67 befindet, um dieses Pneumatikventil 69 aus der Entlüftungsstellung für die Spannzange 63 in die Belüftungsstellung für die Spannzange 63 umzuschalten und damit eine Festlegung eines an der Beladeposition 67 in die jeweilige Spannzange 63 eingeschobenen Behälterrohlings zu ermöglichen.

Die Aufgabe des zweiten Impulsgebers 44 besteht darin, bei Vorliegen eines minimalen Abstands zwischen dem Werkzeugrundtisch 15 und dem Werkstückrundtisch 62 einen Druckluftimpuls an die zweite Steueröffnung 71 desjenigen Pneumatikventils 69 bereitzustellen, das sich an der Entladeposition 68 befindet, um dieses Pneumatikventil 69 aus der Belüftungsstellung für die Spannzange 63 in die Entlüftungsstellung für die Spannzange 63 umzuschalten und damit eine Freigabe eines an der Entladeposition 67 aus der jeweilige Spannzange 63 zu entnehmenden Behälterrohlings zu ermöglichen.

In der Praxis können noch weitere, nicht dargestellte Ventilscheiben der Ventilinsel dazu genutzt werden, nicht dargestellte weitere Impulsgeber an anderen Positionen abseits der Beladeposition und der Entlageposition anzusteuern.

Gemäß der Darstellung der Figur 3 sind an der Werkzeugoberfläche 41 insgesamt fünf erste Kupplungsteile 23 angeordnet, wobei drei der ersten Kupplungsteile 23 einer ersten Gruppe 48 zugehörig sind und weitere zwei der ersten Kupplungsteilen 23 einer zweiten Gruppe 49 zugehörig sind. Die erste Kupplungsteile 23 der ersten Gruppe 48 sind in der gleichen Winkelteilung wie die Werkzeugaufnahmen 16 am Werkstückrundtisch 15 angeordnet und dienen während eines bestimmungsgemäßen Betriebs der Bearbeitungsmaschine 1 zu Druckluftübertragung zwischen dem Werkzeugrundtisch 15 und dem Werkstückrundtisch 62. Hierbei wird durch die Anordnung der ersten Kupplungsteile 23 der ersten Gruppe 48 sichergestellt, dass im Zuge jeder Drehschrittbewegung, die der Werkstückrundtisch 62 durchführt, jeweils ein erstes Kupplungsteil 23 in fluidisch kommunizierende Verbindung mit einem der zweiten Kupplungsteile 73 kommt.

Die der zweiten Gruppe 49 zugehörigen ersten Kupplungsteile 23 sind um eine halbe Winkelteilung bezüglich der Winkelteilung der Werkzeugaufnahmen 16 versetzt zu den ersten Kupplungsteilen 23 der ersten Gruppe 48 angeordnet und können verwendet werden, wenn der Werkstückrundtisch 62 beispielsweise bei der Durchführung von Wartungsarbeiten nur um einen halben Drehschrittbetrag gegenüber dem Werkzeugrundtisch 15 verlagert wurde.

Während die ersten Kupplungsteile 23 der ersten Gruppe 48 für einen bestimmungsgemäßen Betrieb der Bearbeitungsmaschine 1 zwingend notwendig sind, sind die erste Kupplungsteile 23 der zweiten Gruppe 49 lediglich optional und können auch weggelassen werden.

Wie den Darstellungen der Figuren 2 und 3 entnommen werden kann, sind die Pneumatikventile 69 auf einem ersten Kreis 51 angeordnet und die Impulsgeber 43, 44 sind auf einem zweiten Kreis 52 angeordnet sind. Vorzugsweise ist vorgesehen, dass ein erster Radius 53 des ersten Kreises 51 gleich einem zweiten Radius 54 des zweiten Kreises 52 ist.

Wie der Darstellung der Figur 2 entnommen werden kann, sind die zweiten Kupplungsteile 62 auf einem vierten Kreis 56 angeordnet. Ferner kann der Darstellung der Figur 3 entnommen werden, dass die erste Kupplungsteile 23 auf einem dritten Kreis 55 angeordnet sind. Vorzugsweise ist vorgesehen, dass ein dritter Radius 57 des dritten Kreises 55 gleich einem vierten Radius 58 des vierten Kreises 56 ist.

Eine Funktionsweise der Bearbeitungsmaschine 1 kann in folgender Weise erläutert werden: zu einem gegebenen Zeitpunkt befindet sich der Werkstückrundtisch 62 in Ruhe und der Werkzeugrundtisch 15 ist mit einem axialen Abstand gegenüber dem Werkstückrundtisch 62 angeordnet. An der Beladeposition 67 erfolgt mit Hilfe einer nicht näher dargestellten Zuführeinrichtung eine Bereitstellung eines Behälterrohlings, der mit einem gewissen Abstand koaxial zu derjenigen Spannzange 63 angeordnet wird, die sich an der Beladeposition 67 befindet. Anschließend findet eine Annäherungsbewegung des Werkzeugrundtischs 15 an den Werkstückrundtisch 62 statt, um den Behälterrohling in die Spannzange 63 einzuschieben. Solange sich der Werkstückrundtisch 62 in Ruhe befindet, wird derjenige Linearantrieb 31, dessen zugeordnetes erstes Kupplungsteil 23 einem zweiten Kupplungsteil 73 gegenüberliegt, derart von der Ventilinsel 27 mit Druckluft versorgt wird, dass die Kolbenstange 33 ausfährt und damit einen Abstand zwischen dem ersten Kupplungsteil 23 und dem zweiten Kupplungsteil 73 reduziert. Im Zuge dieser Annäherungsbewegung kommt das erste Kupplungsteil 23 in abdichtende Anlage mit dem zweiten Kupplungsteil 23, sodass eine Bereitstellung von Druckluft vom ersten Kupplungsteil 23 an das zweite Kupplungsteil 73 durchgeführt werden kann, um damit die Druckluftspeicher 74 zu befüllen. Beispielhaft ist vorgesehen, dass die Ventilsteuerung 29 für diejenige Ventilscheibe 28, die für die Druckluftversorgung des Linearantriebs 31 verwendet wird, eine Kraftregelung vorsieht, sodass im Zuge der Annäherungsbewegung stets eine konstante Antriebskraft zwischen dem ersten Kupplungsteilen 23 und dem zweiten Kupplungsteil 73 gewährleistet ist. Im Zuge der Annäherungsbewegung des Werkzeugrundtischs 15 an den Werkstückrundtisch 62 tritt ein nicht dargestellter, am Werkzeugrundtisch 15 in der entsprechenden Werkzeugaufnahme 16 aufgenommener Aufschieber in Kontakt mit einer Stirnfläche des Behälterrohlings und bewirkt ein Einschieben des Behälterrohlings in die koaxial angeordnete Spannzange 63. Hierbei wird vorausgesetzt, dass sich die Spannzange 63 in einer Freigabestellung befindet, um eine möglichst reibungsarmen Einschiebevorgang für den Behälterrohling sicherzustellen. Hierzu ist vorzugsweise vorgesehen, dass sich das Pneumatikventil 69 dieser Spannzange 63 in einer Entlüftungsstellung befindet. Sobald der Werkzeugrundtisch 15 einen minimalen Abstand gegenüber dem Werkstückrundtisch 62 einnimmt, führt die Ventilinsel 27 eine Ansteuerung des ersten Impulsgebers 43 durch, um eine Abgabe eines Druckluftimpulses vom ersten Impulsgeber 43 an die erste Steueröffnung 70 des gegenüberliegend angeordneten Pneumatikventils 69 zu erzielen und dadurch eine Überführung dieses Pneumatikventils 69 aus der Entlüftungsstellung in die Belüftungsstellung zu bewirken. Hierdurch erfolgt eine Druckluftversorgung der Spannzange 63, womit diese eine Festlegung des zuvor eingeschobenen Behälterrohlings bewirkt. Während der sich daran anschließenden Entfernungsbewegung zwischen dem Werkzeugrundtisch 15 und dem Werkstückrundtisch 62 wird die Kraftregelung für den Linearantrieb 31 zumindest zeitweilig aufrechterhalten. Mit zunehmendem Abstand zwischen dem Werkzeugrundtisch 15 und dem Werkstückrundtisch 62 wird die Druckluftübertragung zwischen dem ersten Kupplungsteil 23 und dem zweiten Kupplungsteil 73 unterbrochen und die Ventilsteuerung 29 steuert die zur Versorgung des Linearantriebs 31 genutzte Ventilscheibe 28 derart an, dass die Kolbenstange 33 einfährt, womit das erste Kupplungsteil 23 vom zweiten Kupplungsteil 73 entfernt wird und anschließend die Drehschrittbewegung für den Werkstückrundtisch 62 durchgeführt werden kann. Betrachtet man den gemäß der vorstehenden Beschreibung an der Beladeposition 67 zugeführten Behälterrohling, so wird dieser im Zuge nachfolgender Drehschrittbewegungen des Werkstückrundtischs 62 und damit einhergehender Oszillationsbewegungen des Werkzeugrundtischs 15 längs eines als Kreisbogenabschnitt ausgebildeten Bewegungswegs 78 bis zur Entladeposition 68 bewegt. An der Entladeposition 68 erfolgt bei einem minimalen Abstand zwischen Werkzeugrundtisch 15 und Werkstückrundtisch 62 eine Ansteuerung des zweiten Impulsgebers 44 durch die Ventilinsel 27, womit ein Druckimpuls in die zweite Steueröffnung 71 des Pneumatikventils 69 abgegeben wird, um dieses Pneumatikventil 69 aus der Belüftungsstellung in die Entlüftungsstellung zu überführen und damit die kraftschlüssige Festlegung des Behälterrohlings aufzuheben. Um zu gewährleisten, dass der Behälterrohling nach Freigabe durch die Spannzange 63 nicht in eine unerwünschte Position gelangt, ist gegenüberliegend zur Entladeposition 68 ein nicht dargestellter Behältergreifer in der zugeordneten Werkzeugaufnahme 16 aufgenommen, mit dem der Behälterrohling gegriffen und an ein nicht dargestelltes Transportsystem übergeben werden kann.

Es versteht sich, dass bei einem bestimmungsgemäßen Gebrauch der Bearbeitungsmaschine 1 ein Behälterrohling an der Beladeposition 67 zugeführt und ein Behälterrohlingen an der Entladeposition 68 abgeführt wird und dass die Behälterrohlinge, die in den Spannzangen 63 längs des Bewegungswegs 78 aufgenommen sind, durch nicht dargestellte Bearbeitungswerkzeuge, die an den Werkzeugaufnahmen 16 des Werkzeugrundtischs 15 aufgenommen sind, bearbeitet werden.

Um eine Einstellung der Haltekraft für die Spannzangen 63 vornehmen zu können, kann optional ein nicht dargestelltes, elektrisch einstellbares Druckregelventil zwischen der nicht dargestellten, dem Maschinenrahmen 12 zugeordneten Druckluftquelle und der Ventilinsel 27 vorgesehen werden, mit dem der Versorgungsdruck für die Ventilinsel 27 eingestellt werden kann. Alternativ kann vorgesehen werden, dass die Ventilscheiben 28, die fluidisch kommunizierend mit den ersten Kupplungsteilen 23 verbunden sind und die für die Freigabe oder Blockierung von Druckluft für die ersten Kupplungsteile 23 vorgesehen sind, durch eine geeignete elektrische Ansteuerung in der Lage sind, eine Druckanpassung für die jeweils an die zweiten Kupplungsteile 73 bereitgestellte Druckluft vorzunehmen.

## Patentansprüche

1. Bearbeitungsmaschine (1) zur Bearbeitung von Behälterrohlingen (65), mit einem ersten Maschinenteil (11), mit einem als Werkstückrundtisch (62) ausgebildeten zweiten Maschinenteil (61), wobei der Werkstückrundtisch (62) drehbar um eine Drehachse (14) am ersten Maschinenteil (11) gelagert ist, und mit einer am ersten Maschinenteil (11) festgelegten Antriebseinrichtung (13), die für eine Bereitstellung einer Drehschrittbewegung für den Werkstückrundtisch (62) ausgebildet ist, wobei an einer Werkstückoberfläche (91) des Werkstückrundtischs (62) pneumatisch betätigte Spannzangen (63) angebracht sind, die für eine lösbare Festlegung von Behälterrohlingen (65) am Werkstückrundtisch (62) ausgebildet sind, wobei jeder Spannzange (63) ein Pneumatikventil (69) zugeordnet ist, das zwischen einer Belüftungsstellung für die Spannzange (63) und einer Entlüftungsstellung für die Spannzange (63) umschaltbar ist, wobei mehrere Pneumatikventile (69) mit einem am Werkstückrundtisch (62) festgelegten Druckluftspeicher (74) verbunden sind, sowie mit einer Kupplungseinrichtung (22), die für eine Druckluftversorgung des Druckluftspeichers (74) ausgebildet ist und die ein erstes Kupplungsteil (23) aufweist, das beweglich am ersten Maschinenteil (11) gelagert ist, und die ein zweites Kupplungsteil (73) aufweist, das, insbesondere in einer quer zur Drehachse (14) ausgerichteten Kupplungsebene (79), gegenüberliegend zum ersten Kupplungsteil (23) am Werkstückrundtisch (62) angeordnet ist, wobei das erste Kupplungsteil (23) in einer Kupplungsstellung abdichtend am zweiten Kupplungsteil (73) anliegt und in einer Ruhestellung einen Abstand zum zweiten Kupplungsteil (73) einnimmt.

2. Bearbeitungsmaschine (1) nach Anspruch 1, **dadurch gekennzeichnet, dass** am ersten Maschinenteil (11) ein Antriebsgehäuse (32) eines Linearantriebs (31) angebracht ist und dass das erste Kupplungsteil (23) an einer Koppelstange (33) des Linearantriebs (31) angebracht ist, die für eine lineare, insbesondere parallel zur Rotationsachse (14) ausgerichtete, Relativbewegung gegenüber dem Antriebsgehäuse (32) ausgebildet ist, um das erste Kupplungsteil (23) zwischen der Ruhestellung und der Kupplungsstellung zu bewegen.

3. Bearbeitungsmaschine (1) nach Anspruch 2, **dadurch gekennzeichnet, dass** dem ersten Kupplungsteil (23) ein Fluidventil (28) zugeordnet ist, das für eine Bereitstellung von Druckluft vom ersten Kupplungsteil (23) an das zweite Kupplungsteil (73) ausgebildet ist, wenn das erste Kupplungsteil (23) in der Kupplungsstellung angeordnet ist.

4. Bearbeitungsmaschine (1) nach Anspruch 2 oder 3, **dadurch gekennzeichnet, dass** der Linearantrieb (31) als Pneumatikzylinder, insbesondere als doppeltwirkender Pneumatikzylinder, ausgebildet ist und dass dem Linearantrieb (31) ein Steuerventil (28) zugeordnet ist, das für eine Steuerung einer Fluidversorgung für den Linearantrieb (31) ausgebildet ist.

5. Bearbeitungsmaschine (1) nach einem der vorhergehenden Ansprüche, **dadurch gekennzeichnet, dass** der erste Maschinenteil (11) einen Maschinenrahmen (12) und einen linearbeweglich längs der Drehachse (14) gelagerten Werkzeugrundtisch (15) aufweist, wobei der Werkzeugrundtisch (15) eine gegenüberliegend zur Werkstückoberfläche (91) angeordnete Werkzeugoberfläche (41) aufweist, an der mehrere Werkzeugaufnahmen (16) in gleicher Winkelteilung wie die Winkelteilung der Spannzangen (63) angeordnet sind.

6. Bearbeitungsmaschine (1) nach Anspruch 5, **dadurch gekennzeichnet, dass** wenigstens eine Komponente aus der Gruppe: Linearantrieb mit erstem Kupplungsteil, Steuerventil, Fluidventil, Impulsgeber, elektrische Ventilsteuerung, an dem Werkzeugrundtisch (15), insbesondere auf der Werkzeugoberfläche, angeordnet ist.

7. Bearbeitungsmaschine (1) nach einem der Ansprüche 1 bis 6, **dadurch gekennzeichnet, dass** die Werkzeugaufnahme (16) zur Aufnahme von Bearbeitungswerkzeugen aus der Gruppe: Einziehwerkzeug, Fräswerkzeug, Bördelwerkzeug, Rollwerkzeug, ausgebildet ist.

8. Bearbeitungsmaschine (1) nach einem der Ansprüche 1 bis 4, **dadurch gekennzeichnet, dass** am ersten Maschinenteil (11) mehrere Arbeitsstationen, insbesondere aus der Gruppe: Druckstation, Aktivierungsstation, Aushärtungsstation, angeordnet sind, die für eine Bearbeitung einer Seitenfläche eines in der Spannzange (63) aufgenommenen Behälterrohlings (65) ausgebildet sind.

9. Bearbeitungsmaschine (1) nach einem der Ansprüche 1 bis 8, **dadurch gekennzeichnet, dass** die zweiten Kupplungsteile (73) an der Werkstückoberfläche (91) des Werkstückrundtischs (62) angeordnet sind.

10. Bearbeitungsmaschine (1) nach einem der Ansprüche 1 bis 9, **dadurch gekennzeichnet, dass** die Pneumatikventile (69) für eine kontaktlose Umschaltung zwischen der Belüftungsstellung für die Spannzange (63) und der Entlüftungsstellung für die Spannzange (63) ausgebildet sind und/oder dass die Pneumatikventile (69) an der Werkstückoberfläche (91) des Werkstückrundtischs (62) angeordnet sind.

11. Bearbeitungsmaschine (1) nach Anspruch 10, **dadurch gekennzeichnet, dass** die Pneumatikventile (69) auf einem konzentrisch zur Drehachse (14) ausgerichteten ersten Kreis (51) angeordnet sind und dass wenigstens ein Impulsgeber (43, 44) am ersten Maschinenteil (11) angeordnet ist, der zur Ansteuerung der Pneumatikventile (69) ausgebildet ist und der auf einem konzentrisch zur Drehachse (14) ausgerichteten zweiten Kreis (52) angeordnet ist, wobei der erste Kreis (51) und der zweite Kreis (52), insbesondere im Wesentlichen, den gleichen Durchmesser (53, 54) aufweisen.

12. Bearbeitungsmaschine (1) nach einem der vorhergehenden Ansprüche, **dadurch gekennzeichnet, dass** am Werkstückrundtisch (62) mehrere zweite Kupplungsteile (73) in einer Winkelteilung angeordnet sind, die einer Winkelteilung der Spannzangen (63) entspricht.

13. Bearbeitungsmaschine (1) nach Anspruch 12, **dadurch gekennzeichnet, dass** am ersten Maschinenteil (11), insbesondere am Werkzeugrundtisch (15), wenigstens zwei erste Kupplungsteile (23) in einer Winkelteilung angeordnet sind, die einer halben Winkelteilung der Spannzangen (63) entspricht.

14. Bearbeitungsmaschine (1) einem der vorhergehenden Ansprüche, **dadurch gekennzeichnet, dass** in einer Fluidleitung, die sich vom zweiten Kupplungsteil (73) zum Druckluftspeicher (74) erstreckt, ein Rückschlagventil (80) angeordnet ist, das für eine Freigabe der Fluidleitung (81) bei Vorliegen einer positiven Druckdifferenz zwischen dem zweiten Kupplungsteil (73) und dem Druckluftspeicher (74) ausgebildet ist.

15. Bearbeitungsmaschine (1) nach einem der vorhergehenden Ansprüche, **dadurch gekennzeichnet, dass** ein Produkt aus einer Anzahl der ersten Kupplungsteile (23) und einer Anzahl der zweiten Kupplungsteile (73) mindestens einer Anzahl der Spannzangen (63) am Werkstückrundtisch (62) entspricht.
